# FASCICULE DE BREVET EUROPEEN

(11) **EP 1 440 936 B1**
(45) Date de publication et mention de la délivrance du brevet: **03.06.2009**
(21) Numéro de dépôt: 03293027.3
(22) Date de dépôt: 03.12.2003
(51) Int. Cl.: C01B 33/00, C01B 39/48

(54) **Solide cristallisé IM-9 et son procédé de préparation**
Kristallisiertes IM-9 Material sowie das Verfahren zu dessen Herstellung
Crystallized IM-9 solid material and its production process

(30) Priorité: 16.01.2003 FR 0300431
(43) Date de publication de la demande: 28.07.2004
(73) Titulaire: Institut Français du Pétrole, 92852 Rueil-Malmaison Cedex (FR)
(72) Inventeur: Harbuzaru, Bogdan, 69007 Lyon (FR); Paillaud, Jean-Louis, 68100 Mulhouse (FR); Patarin, Joel, 68720 Flaxlanden (FR); Bats, Nicolas, 69590 Pomeys (FR); Rouleau, Loic, 69390 Charly (FR)

(56) Documents cités:
- CORMA A ET AL: "Determination of the Pore Topology of Zeolite IM-5 by Means of Catalytic Test Reactions and Hydrocarbon Adsorption Measurements" , JOURNAL OF CATALYSIS, ACADEMIC PRESS, DULUTH, MN, US, VOL. 189, NR. 2, PAGE(S) 382-394 XP004438043 ISSN: 0021-9517 * le document en entier *

## Description

### Domaine technique

La présente invention se rapporte à un nouveau solide cristallisé appelé ci-après IM-9 présentant une nouvelle structure cristalline, au procédé de préparation dudit solide IM-9 ainsi qu'à l'utilisation dudit solide en tant que catalyseur et adsorbant.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.
Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant: "Atlas of Zeolites Structure Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type CLO (US-5,420,279), ou encore les zéolithes ITQ-13 (US-6,471,941), CIT-5 (US-6,043,179), ITQ-21 (WO-02/092511).
Plusieurs des zéolithes précédement citées ont été synthétisées en milieu fluorure, dans lequel l'agent mobilisateur n'est pas l'ion hydroxyde habituel mais l'ion fluorure, selon un procédé initialement décrit par J.-L. Guth et al. (Proc. Int. Zeol. Conf., Tokyo, 1986, p. 121). Les pH des milieux de synthèses sont typiquement proche de la neutralité. Un des avantages de ces systèmes réactionels fluorés est de permettre l'obtention de zéolithes purement siliciques contenant moins de défauts que les zéolithes obtenues en milieu OH⁻ traditionnel (J.M. Chézeau et al., Zeolites, 1991, 11, 598). Un autre avantage décisif lié à l'utilisation de milieux réactionnels fluorés est de permettre l'obtention de nouvelles topologies de charpente contenant des doubles cycles à quatre tétraèdres comme c'est le cas des zéolithes ITQ-7, ITQ-13, ITQ-17. De plus, l'utilisation du germanium dans ces milieux de synthèse favorise également l'obtention d'une telle charpente comme dans le cas de la zéolithe ITQ-21.

### Description de l'invention

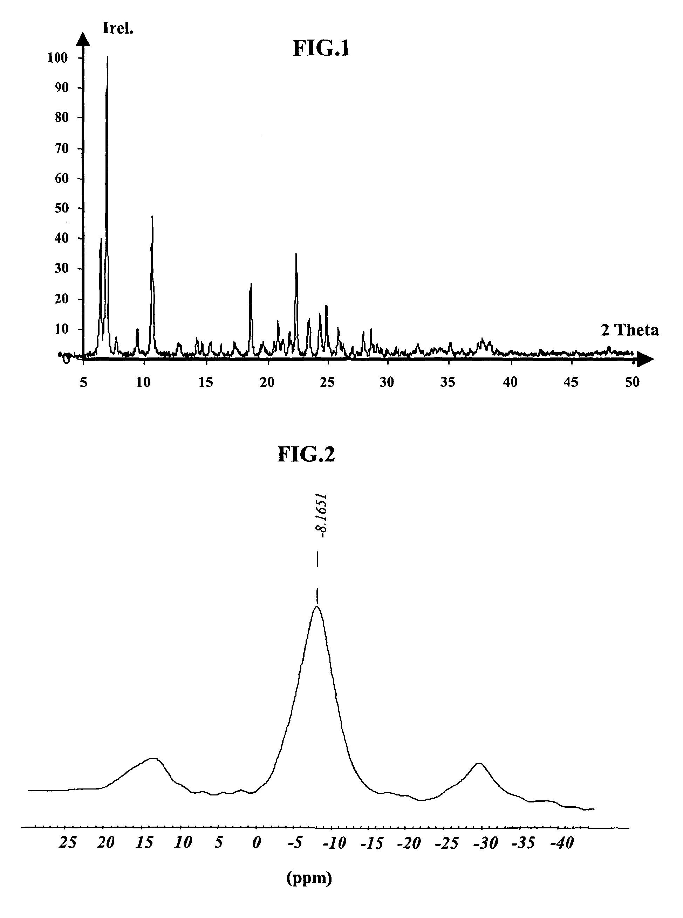

La présente invention se rapporte à un nouveau solide cristallisé, appelé solide cristallisé IM-9, et présentant un diagramme de diffraction de rayons X incluant au moins les raies inscrites dans le tableau 1. Ce diagramme est donné sur la figure 1. Ce nouveau solide cristallisé IM-9 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IM-9 selon l'invention comporte au moins les raies aux valeurs de dₕₖₗ données dans le tableau 1. Dans la colonne des d_{hkl,} on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å.

**Tableau 1: Valeur moyennes des dₕₖₗ et intensités relatives mesurées sur un diagramme de diffraction de rayons X du solide cristallisé IM-9 de l'invention**

| dₕₖₗ (Å) | I/I₀ | 2 thêta (degré) |
|---|---|---|
| 13,74 | mf | 6,425 |
| 12,74 | FF | 6,933 |
| 11,42 | ff | 7,735 |
| 9,36 | f | 9,442 |
| 8,30 | m | 10,653 |
| 6,94 | ff | 12,745 |
| 6,23 | ff | 14,204 |
| 6,06 | ff | 10,605 |
| 5,79 | ff | 15,291 |
| 5,47 | ff | 16,192 |
| 5,11 | ff | 17,337 |
| 4,76 | mf | 18,627 |
| 4,56 | ff | 19,452 |
| 4,52 | ff | 19,625 |
| 4,32 | ff | 20,541 |
| 4,25 | f | 20,887 |
| 4,17 | ff | 21,291 |
| 4,06 | f | 21,876 |
| 3,97 | mf | 22,377 |
| 3,79 | f | 23,449 |
| 3,65 | f | 24,365 |
| 3,57 | f | 24,917 |
| 3,44 | f | 25,874 |
| 3,39 | ff | 26,262 |
| 3,30 | ff | 26,995 |
| 3,19 | ff | 27,946 |
| 3,12 | f | 28,589 |
| 3,07 | ff | 29,067 |
| 2,98 | ff | 29,956 |
| 2,91 | ff | 30,698 |
| 2,84 | ff | 31,473 |
| 2,76 | ff | 32,413 |
| 2,55 | ff | 35,160 |
| 2,49 | ff | 36,040 |
| 2,44 | ff | 36,798 |
| 2,40 | ff | 37,441 |
| 2,38 | ff | 37,763 |
| 2,35 | ff | 38,266 |
| 2,13 | ff | 42,404 |

| | | |
|---|---|---|
| où FF = très fort ; F = fort ; m = moyen ; mf = moyen faible ; f = faible ; ff = très faible. | | |

L'intensité relative I/I₀ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85.
Le diagramme de diffraction du solide cristallisé IM-9 selon l'invention ne présente pas de raies pour la fourchette 65 ≤F < 85.
Le solide cristallisé IM-9 selon l'invention présente une nouvelle structure cristalline de base ou topologie qui est caractérisée par son diagramme de diffraction X donné par la figure 1. La nouvelle structure cristalline du solide cristallisé IM-9 selon l'invention est une structure tridimentionnelle formée de tétraèdres. Elle comprend notamment des unités de type doubles cycles à quatre tétraèdres mises en évidence par spectroscopie de résonance magnétique nucléaire de l'élément ¹⁹F (figure 2). Le sommet de chaque tétraèdre est occupé par un atome d'oxygène.

Ledit solide présente une composition chimique, exprimée sur une base anhydre, en termes de mole d'oxydes, définie par la formule générale suivante : XO₂ : m YO₂ : p Z₂O₃ : q R_{2/*n*}O : s F (I) dans laquelle R représente un ou plusieurs cation(s) de valence n, X représente un ou plusieurs élément(s) tétravalent(s) différent(s) du germanium, Y représente le germanium, Z représente au moins un élément trivalent, F est le fluor. Dans la formule (I), m, p, q, s représentent respectivement le nombre de mole de YO₂, Z₂O₃, R_{2/n}O et F.
Avantageusement, le rapport Ge/X de la charpente du solide cristallisé IM-9 selon l'invention est inférieur ou égal à 1. De manière préférée, m est compris entre 0,1 et 0,9 et de manière encore plus préférée, m est compris entre 0,3 et 0,7. Le rapport {(1+m)/p} est supérieur ou égal à 5 et est de manière préférée supérieur ou égal à 7. La valeur de p est préférentiellement comprise entre 0 et 0,5, très préférentiellement comprise entre 0 et 0,4 et de manière encore plus préférée comprise entre 0,01 et 0,4. Les valeurs de q et s sont avantageusement comprises entre 0,01 et 0,7 et très avantageusement comprises entre 0,1 et 0,5.
Conformément à l'invention, X est préférentiellement choisi parmi le silicium, l'étain et le titane, et Z est préférentiellement choisi parmi l'aluminium, le bore, le fer, l'indium et le gallium et très préférentiellement Z est l'aluminium. De manière préférée, X est le silicium : le solide cristallisé IM-9 selon l'invention est alors un métallosilicate cristallisé présentant un diagramme de diffraction des rayons X identique à celui décrit dans le tableau 1. De manière encore plus préférée, X est le silicium et Z est l'aluminium: le solide cristallisé IM-9 selon l'invention est alors un aluminosilicate cristallisé présentant un diagramme de diffraction des rayons X identique à celui décrit dans le tableau 1.
Dans le cas où le solide cristallisé IM-9 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide IM-9 comporte au moins un cation organique azoté tel que celui décrit ci-après ou ses produits de décomposition, ou encore ses précurseurs. Sous forme brute de synthèse, le (ou les) cation(s) R présent(s) dans la formule (I) est(sont) au moins en partie, et de préférence entièrement, le(s)dit(s) cation(s) organique(s) azoté(s). Selon un mode préféré de l'invention, R est le cation (6R,10S)-6,10-diméthyl-5-azoniaspiro[4,5]décane dans le cas où le solide cristallisé IM-6 est sous forme brute de synthèse. Le (6R,10S)-6,10-diméthyl-5-azoniaspiro[4,5]décane joue le rôle de structurant organique. Ce structurant utilisé lors de la préparation du solide cristallisé IM-9, telle que décrite plus loin dans la description, compense la charge négative de la charpente. Le structurant peut être éliminé par les voies classiques de l'état de la technique comme des traitements thermiques et/ou chimiques. Selon un autre mode préféré de l'invention, le cation (6R,10S)-6,10-diméthyl-5-azoniaspiro[4,5]décane est mélangé à un autre cation, préférentiellement un cation alcalin, par exemple le sodium, dans le cas où le solide cristallisé IM-6 est sous forme brute de synthèse.
Le solide cristallisé IM-9 selon l'invention est zéolithique.
L'invention concerne également un procédé de préparation du solide cristallisé IM-9 dans lequel on fait réagir un mélange aqueux comportant au moins une source d'au moins un oxyde XO₂, éventuellement au moins une source de l'oxyde YO₂ éventuellement au moins une source d'au moins un oxyde Z₂O₃, et éventuellement au moins une source d'un oxyde M_{2/w}O et au moins un cation organique azoté R, ou un précurseur du cation organique azoté ou un produit de décomposition du cation organique azoté, le mélange présentant généralement la composition molaire suivante :
- (XO₂+YO₂)/Z₂O₃: : au moins 5, de préférence au moins 7,
- M_{2/w}O/(XO₂+YO₂): : 0 à 3, de préférence 0 à 1, et de manière très préférée 0,01 à 1
- H₂O/(XO₂+YO₂): : 1 à 50, de préférence 2 à 30,
- R/(XO₂+YO₂): : 0,1 à 3, de préférence 0,1 à 1,
- F/(XO₂+YO₂): : 0,1 à 3, de préférence 0,1 à 1,
- YO₂/XO₂: : 0 à 1, de préférence 0,5 à 1,
- LₐS/XO₂: : 0 à 0,5, de préférence 0 à 0,3,
où X est un ou plusieur(s) élément(s) tétravalent(s) différent(s) du germanium, de préférence le silicium, Y est le germanium, Z est un ou plusieurs élément(s) trivalent(s) choisi(s) dans le groupe formé par les éléments suivants : aluminium, fer, bore, indium et gallium, de préférence l'aluminium, M est un cation de valence w pouvant comporter un cation de métal alcalin et/ou de l'ammonium. LₐS est un sel, S étant un anion de valence a et L étant un ion de métal alcalin ou ammonium, qui peut être similaire à M, ou un mélange de M et d'un autre ion de métal alcalin ou un ion ammonium nécessaire pour équilibrer l'anion S, S pouvant comporter un radical acide ajouté par exemple sous la forme d'un sel de L ou d'un sel d'aluminium. Le cation M utilisé est de préférence un métal alcalin, notamment du sodium.
On peut citer à titre d'exemples pour S des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Bien que le LₐS ne soit pas essentiel, il peut accélérer la cristallisation du solide IM-9 selon l'invention à partir du mélange réactionnel et il peut également affecter la taille et la forme des cristaux constituant le solide IM-9. Dans tous les cas, la réaction se poursuit jusqu'à obtention de la cristallisation.
Le fluor peut être introduit sous forme de sels de métaux alcalins ou d'ammonium comme par exemple NaF, NH₄F, NH₄HF₂ ou sous forme d'acide fluorhydrique ou encore sous forme de composés hydrolysables pouvant libérer des anions fluorures dans l'eau comme le fluorure de silicium SiF₄ ou les fluorosilicates d'ammonium (NH₄)₂SiF₆ ou de sodium Na₂SiF₆.
Conformément au procédé selon l'invention, R est un structurant organique azoté.
Préférentiellement R est le composé organique azoté de type (6R,10S)-6,10-diméthyl-5-azoniaspiro[4,5]décane ou un de ses dérivés. Il s'agit préférentiellement d'un sel de (6R,10S)-6,10-diméthyl-5-azoniaspiro[4,5]décane tel que par exemple l'halogénure, le sulfate, le nitrate, l'acétate, le silicate ou l'aluminate ou de l'hydroxyde de (6R,10S)-6,10-diméthyl-5-azoniaspiro[4,5]décane est un hydroxyde.

Le cation M et/ou le structurant organique peu(ven)t être ajouté(s) sous forme d'hydroxydes ou de sels d'acides minéraux à condition que les rapports M_{2/w}O/(XO₂+YO₂) et R/(XO₂+YO₂) soient respectés.
La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL", et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telles que "LUDOX". Les silices dissoutes qui peuvent être employées comprennent également les silicates au verre soluble disponibles dans le commerce, contenant 0,5 à 6,0, notamment 2,0 à 4,0 moles de SiO₂ par mole d'oxyde de métal alcalin, des silicates de métaux alcalins "actifs" tels que définis dans le brevet britannique GB-1.193.254, et des silicates obtenus par dissolution de silice dans un hydroxyde de métal alcalin ou un hydroxyde d'ammonium quaternaire, ou encore un mélange de ceux-ci. De manière préférée, la source de silicium est le TEOS.
La source de l'élément Z peut être tout composé comprenant l'élément Z et pouvant libérer cet élément en solution aqueuse sous forme réactive. Dans le cas préféré où Z est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.
Certaines ou l'ensemble des sources d'alumine et de silice peuvent éventuellement être ajoutées sous forme d'aluminosilicate.
La source d'élément Y pourra être par exemple un oxyde de germanium GeO₂.

Selon un mode de réalisation préféré du procédé selon l'invention, on fait réagir un mélange aqueux comportant de la silice, de l'alumine, un oxyde de germanium, de l'acide fluorhydrique et de l'hydroxyde de (6R,10S)-6,10-diméthyl-5-azoniaspiro[4,5]décane.
Le procédé selon l'invention consiste à préparer un mélange réactionnel aqueux appelé gel et renfermant au moins une source d'au moins un oxyde XO₂, éventuellement au moins une source de l'oxyde YO₂, éventuellement au moins une source d'au moins un oxyde Z₂O₃, éventuellement au moins une source d'un oxyde M_{2/w}O et au moins un cation organique azoté R, ou au moins un précurseur du cation organique azoté ou au moins un produit de décomposition du cation organique azoté. Les quantités desdits réactifs sont ajustées de manière à conférer à ce gel une composition permettant sa cristallisation en solide cristallisé IM-9 de formule XO₂: m YO₂ : p Z₂O₃ : q R_{2/n}O : s F, où m, p, q, n et s répondent aux critères définis plus haut. Puis le gel est soumis à un traitement hydrothermal jusqu'à ce que le solide cristallisé IM-9 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore préférentielle à une température qui ne dépasse pas 175°C jusqu'à la formation des cristaux de solide IM-9 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.
II peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé IM-9 au détriment d'impuretés. De tels germes comprennent des solides cristallisés, notamment des cristaux de solide IM-9. Les germes cristallins sont généralement ajoutés dans une proportion comprise entre 0,01 et 10 % du poids de l'oxyde XO₂, de préférence de la silice, utilisé dans le mélange réactionnel.
A la fin de la réaction, la phase solide est filtrée et lavée ; elle est ensuite prête pour des étapes ultérieures telles que le séchage, la déshydratation et la calcination et/ou l'échange d'ions.

Si le produit de la réaction contient des ions de métaux alcalins, ceux-ci doivent être éliminés au moins en partie en vue de la préparation de la forme hydrogène du solide cristallisé IM-9 selon l'invention, au moyen d'au moins un échange d'ions avec un acide, notamment un acide minéral tel que l'acide chlorhydrique et/ou à l'aide du composé d'ammonium obtenu par échange d'ions avec une solution d'un sel d'ammonium tel que du chlorure d'ammonium. L'échange d'ions peut être effectué au moyen d'une mise en suspension épaisse, à une ou plusieurs reprise(s), dans la solution d'échange d'ions. Le solide cristallisé est généralement calciné avant l'échange d'ions afin d'éliminer toute substance organique absorbée dans la mesure où l'échange d'ions s'en trouve facilité. Toutes les conditions opératoires d'élimination du structurant organique et/ou d'échanges ioniques sont connues de l'homme du métier.
D'une manière générale, on peut remplacer le(s) cation(s) du solide cristallisé IM-9 par tout cation ou tous cations de métaux, notamment ceux des groupes IA, IB, IIA, IIB, IIIA, IIIB (y compris les terres rares) et VIII (y compris les métaux nobles) de la classification périodique des éléments, et par l'étain, le plomb et le bismuth. L'échange s'effectue normalement avec une solution contenant un sel du cation approprié, de la manière connue de l'homme du métier.
La présente invention concerne l'utilisation du solide cristallisé IM-9 selon l'invention comme adsorbant pour le contrôle de la pollution ou comme tamis moléculaire pour la séparation. Il est également avantageusement utilisé comme solide acide pour catalyser des réactions, par exemple celles intervenant dans les domaines du raffinage et de la pétrochimie.
La présente invention a donc également pour objet un adsorbant comprenant le solide cristallisé IM-9 selon l'invention. Lorsqu'il est utilisé comme adsorbant, le solide cristallisé IM-9 selon l'invention est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silice-alumines ou des argiles. La matrice représente de manière générale entre 2 et 25% en masse de l'adsorbant ainsi formé.

La présente invention a également pour objet un catalyseur comprenant le solide cristallisé IM-9 selon l'invention. Lorsqu'il est utilisé comme catalyseur, le solide cristallisé IM-9 selon l'invention, peut être associé à une matrice inorganique qui peut être inerte ou catalytiquement active et à une phase métallique. La matrice inorganique peut être présente simplement comme liant pour maintenir ensemble les petites particules du solide cristallisé IM-9 sous les différentes formes connues des catalyseurs (extrudés, pastilles, billes, poudres), ou bien peut être ajoutée comme diluant pour imposer le degré de conversion dans un procédé qui sinon progresserait à une allure trop rapide, conduisant à un encrassement du catalyseur en conséquence d'une formation importante de coke. Des matrices inorganiques typiques sont notamment des matières de support pour les catalyseurs comme les différentes formes de silice, d'alumine, les silice-alumine, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active.
Le solide cristallisé IM-9 de l'invention peut aussi être associé à au moins une autre zéolithe et jouer le rôle de phase active principale ou d'additif.
La phase métallique peut être introduite intégralement sur le solide IM-9. Elle peut être également introduite intégralement sur la matrice inorganique ou encore sur l'ensemble matrice inorganique-solide cristallisé IM-9 par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les compositions catalytiques comportant le solide IM-9 selon l'invention conviennent de façon générale à la mise en oeuvre des principaux procédés de transformation d'hydrocarbures et des réactions de synthèse de composés organiques.

Les compositions catalytiques comportant le solide IM-9 de l'invention trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, de reformage, d'hydrogénation et de déshydrogénation, d'oxydation, d'halogénation, de synthèses d'amines, d'hydrodésulfuration et d'hydrodénitrification, d'élimination catalytique des oxydes d'azote, lesdites réactions impliquant des charges comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

L'invention est illustrée au moyen des exemples suivants.

### Exemple 1 : préparation d'un solide cristallisé IM-9 selon l'invention

On verse dans un bécher en polypropylène 15,41g de solution aqueuse à 20% d'hydroxyde de (6R,10S)-6,10-dimethyl-5-azoniaspiro[4,5]décane (ROH) et 1,75g d'oxyde de germanium amorphe (Aldrich). Après la dissolution sous agitation de l'oxyde, 3,47g de tétraéthoxysilane (Aldrich) sont ajoutés. On évapore à température ambiante et sous agitation l'éthanol et l'excès d'eau jusqu'à ce que l'on atteigne une masse de 17,33g. On ajoute alors 0,83g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.
La composition molaire du gel est 0,5 SiO₂ : 0,5 GeO₂ : 0,5 ROH : 0,5 HF : 20 H₂O.
L'autoclave est chauffé pendant 4 jours à 170°C dans une étuve. Pendant la synthèse l'autoclave est continuellement agité, l'axe longitudinal de l'autoclave tournant avec une vitesse d'environ 15 tours/minute dans un plan perpendiculaire à l'axe de rotation. Le pH de synthèse est proche de 8. Après filtration, le produit est lavé à l'eau distillée et séché à 70°C.
Le produit solide séché a été analysé par diffraction X de poudres et identifié comme étant constitué de solide IM-9. Le diffractogramme effectué sur l'échantillon brut de synthèse est donné dans la figure 1. L'analyse chimique du produit par fluorescence X a été effectuée et donne le rapport SiO₂/GeO₂ = 1,46.

### Exemple 2 : préparation d'un solide cristallisé IM-9 selon l'invention

On verse dans un bécher en polypropylène 15,41g de solution aqueuse à 20% d'hydroxyde de (6R,10S)-6,10-dimethyl-5-azoniaspiro[4,5]décane (ROH) et 1,75g d'oxyde de germanium amorphe (Aldrich). On ajoute 0,0520g d'hydroxyde d'aluminium (Aldrich) (à 64,5-67% en masse d'Al₂O₃). Après la dissolution sous agitation des oxydes, 3,47 g de tétraéthoxysilane (Aldrich) sont ajoutés. On évapore à température ambiante et sous agitation l'éthanol et l'excès d'eau jusqu'à ce que l'on atteigne une masse de 17,36 g. On ajoute alors 0,83 g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.
La composition molaire du gel est :
0,5 SiO₂ : 0,5 GeO₂ : 0,01 Al₂O₃ : 0,5 ROH : 0,5 HF : 20 H₂O
L'autoclave est chauffé pendant 6 jours à 170°C dans une étuve. Pendant la synthèse l'autoclave est continuellement agité, l'axe longitudinal de l'autoclave tournant avec une vitesse d'environ 15 tours/minute dans un plan perpendiculaire à l'axe de rotation. Le pH de synthèse est proche de 8. Après filtration, le produit est lavé à l'eau distillée et séché à 70°C. Le produit solide séché a été analysé par diffraction X de poudres et identifié comme étant constitué de solide IM-9. Le diffractogramme effectué sur l'échantillon brut de synthèse est donné dans la figure 1.

### Exemple 3 : préparation d'un catalyseur contenant le solide cristallisé zéolithique IM-9

La zéolithe utilisée est la zéolithe brute de synthèse de l'exemple 2, de rapport (Si+Ge)/Al global voisin de 90 et comprenant le structurant organique (6R,10S)-6,10-diméthyl-5-azoniaspiro[4,5]décane.
Cette zéolithe subit tout d'abord une calcination à 550°C, durant 6 h, sous flux d'air. Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 h sous air et calcinés à 550°C pendant 2 h sous flux d'air dans un four à moufle. Du platine est déposé sur l'alumine de ce support par échange anionique avec de l'acide hexachloroplatinique en présence d'un agent compétiteur (acide chlorydrique). Le support échangé est ensuite séché à 120°C pendant 12 h sous air et calciné à 550°C sous débit d'air sec pendant 1 h.
Le catalyseur ainsi préparé est composé de 50 % du solide zéolithique IM-9 ayant un rapport (Si+Ge)/Al de 90 et de 49,8 % d'alumine et de 0,14 % platine.

### Exemple 4 : préparation d'un adsorbant contenant le solide cristallisé zéolithique IM-9

La zéolithe utilisée est la zéolithe brute de synthèse de l'exemple 1 (purement silicique) et comprenant le structurant organique (6R,10S)-6,10-diméthyl-5-azoniaspiro[4,5]décane.
Cette zéolithe subit tout d'abord une calcination à 550°C, durant 6 h, sous flux d'air. Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 h sous air et calcinés à 550°C pendant 2 h sous flux d'air dans un four à moufle.
L'adsorbant ainsi préparé est composé de 80 % du solide zéolithique IM-9 purement silicique et de 20 % d'alumine.

## Revendications

1. Solide cristallisé zéolithique IM-9 présentant un diagramme de diffraction de rayons X incluant au moins les raies inscrites dans le tableau ci-dessous :
| dₕₖₗ (Å) | I/I₀ | 2 thêta (degré) |
|---|---|---|
| 13,74 | mf | 6,425 |
| 12,74 | FF | 6,933 |
| 11,42 | ff | 7,735 |
| 9,36 | f | 9,442 |
| 8,30 | m | 10,653 |
| 6,94 | ff | 12,745 |
| 6,23 | ff | 14,204 |
| 6,06 | ff | 10,605 |
| 5,79 | ff | 15,291 |
| 5,47 | ff | 16,192 |
| 5,11 | ff | 17,337 |
| 4,76 | mf | 18,627 |
| 4,56 | ff | 19,452 |
| 4,52 | ff | 19,625 |
| 4,32 | ff | 20,541 |
| 4,25 | f | 20,887 |
| 4,17 | ff | 21,291 |
| 4,06 | f | 21,876 |
| 3,97 | mf | 22,377 |
| 3,79 | f | 23,449 |
| 3,65 | f | 24,365 |
| 3,57 | f | 24,917 |
| 3,44 | f | 25,874 |
| 3,39 | ff | 26,262 |
| 3,30 | ff | 26,995 |
| 3,19 | ff | 27,946 |
| 3,12 | f | 28,589 |
| 3,07 | ff | 29,067 |
| 2,98 | ff | 29,956 |
| 2,91 | ff | 30,698 |
| 2,84 | ff | 31,473 |
| 2,76 | ff | 32,413 |
| 2,55 | ff | 35,160 |
| 2,49 | ff | 36,040 |
| 2,44 | ff | 36,798 |
| 2,40 | ff | 37,441 |
| 2,38 | ff | 37,763 |
| 2,35 | ff | 38,266 |
| 2,13 | ff | 42,404 |
où FF = très fort ; F = fort ; m = moyen ; mf = moyen faible ; f = faible ; ff = très faible, et présentant une composition chimique exprimée sur une base anhydre, en termes de mole d'oxydes, définie par la formule générale suivante : XO₂ : m YO₂ : p Z₂O₃ : q R_{2/n}O : s F (I) dans laquelle R représente un ou plusieurs cation(s) de valence n, X représente un ou plusieurs élément(s) tétravalent(s) différent(s) du germanium, Y représente le germanium, Z représente au moins un élément trivalent, F est le fluor, m, p, q, s représentant respectivement le nombre de mole de YO₂, Z₂O₃, R_{2/n}O et F et m est compris entre 0,1 et 0,9, p est compris entre 0 et 0,5, q et s sont compris entre 0,01 et 0,7, le rapport {(1+m)/p} est supérieur ou égal à 5.

2. Solide cristallisé IM-9 selon la revendication 1 dans lequel X est le silicium.

3. Solide cristallisé IM-9 selon la revendication 1 ou 2 dans lequel Z est l'aluminium.

4. Procédé de préparation d'un solide cristallisé zéolithique IM-9 selon l'une des revendications 1 à 3 consistant à procéder au mélange aqueux d'au moins une source d'au moins un oxyde XO₂, éventuellement d'au moins une source de l'oxyde YO₂, éventuellement d'au moins une source d'au moins un oxyde Z₂O₃, éventuellement d'au moins une source d'un oxyde M_{2/w}O et d'au moins un cation organique azoté R, ou d'au moins un précurseur du cation organique azoté ou d'au moins un produit de décomposition du cation organique azoté puis à procéder au traitement hydrothermal dudit mélange jusqu'à ce que ledit solide cristallisé IM-9 se forme.

5. Procédé de préparation d'un solide cristallisé zéolithique IM-9 selon la revendication 4 tel que la composition molaire du mélange réactionnel est telle que :
| | |
|---|---|
| (XO₂+YO₂)/Z₂O₃ | : au moins 5, |
| M_{2/w}O/(XO₂+YO₂) | : 0 à 3, |
| H₂O/(XO₂+YO₂₎ | : 1 à 50, |
| R/(XO₂+YO₂) | : 0,1 à 3, |
| F/(XO₂+YO₂) | : 0,1 à 3, |
| YO₂/XO₂ | : 0 à 1, |
| LₐS/XO₂ | : 0 à 0,5, |

6. Procédé de préparation d'un solide cristallisé zéolithique IM-9 selon la revendication 4 ou 5 tel que R est un sel du (6R,10S)-6,10-diméthyl-5-azoniaspiro[4,5]décane.

7. Procédé selon l'une des revendications 4 à 6 tel que des germes sont additionnés dans le mélange réactionnel.

8. Utilisation du solide cristallisé zéolithique IM-9 selon l'une des revendications 1 à 3 ou préparé selon l'une des revendications 4 à 7 comme adsorbant.

9. Utilisation du solide cristallisé zéolithique IM-9 selon l'une des revendications 1 à 3 ou préparé selon l'une des revendications 4 à 7 comme catalyseur.

## Claims

1. A zeolitic crystalline solid IM-9 with an X ray diffraction diagram including at least the peaks listed in the table below:
| dₕₖₗ (Å) | I/I₀ | 2theta (degrees) |
|---|---|---|
| 13.74 | mw | 6.425 |
| 12.74 | VS | 6.933 |
| 11.42 | vw | 7.735 |
| 9.36 | w | 9.442 |
| 8.30 | m | 10.653 |
| 6.94 | vw | 12.745 |
| 6.23 | vw | 14.204 |
| 6.06 | vw | 10.605 |
| 5.79 | vw | 15.291 |
| 5.47 | vw | 16.192 |
| 5.11 | vw | 17.337 |
| 4.76 | mw | 18.627 |
| 4.56 | vw | 19.452 |
| 4.52 | vw | 19.625 |
| 4.32 | vw | 20.541 |
| 4.25 | w | 20.887 |
| 4.17 | vw | 21.291 |
| 4.06 | w | 21.876 |
| 3.97 | mw | 22.377 |
| 3.79 | w | 23.449 |
| 3.65 | w | 24.365 |
| 3.57 | w | 24.917 |
| 3.44 | w | 25.874 |
| 3.39 | vw | 26.262 |
| 3.30 | vw | 26.995 |
| 3.19 | vw | 27.946 |
| 3.12 | w | 28.589 |
| 3.07 | vw | 29.067 |
| 2.98 | vw | 29.956 |
| 2.91 | vw | 30.698 |
| 2.84 | vw | 31.473 |
| 2.76 | vw | 32.413 |
| 2.55 | vw | 35.160 |
| 2.49 | vw | 36.040 |
| 2.44 | vw | 36.798 |
| 2.40 | vw | 37.441 |
| 2.38 | vw | 37.763 |
| 2.35 | vw | 28.266 |
| 2.13 | vw | 42.404 |
in which VS = very strong; S = strong; m = medium; mw = medium weak; w = weak; vw = medium weak, and having a chemical composition, expressed as the anhydrous base in terms of the moles of oxides, defined by the following general formula: XO₂: mYO₂: pZ₂O₃: qR_{2/n}O: sF (I), in which R represents one or more cation(s) with valency n, X represents one or more tetravalent element(s) other than germanium, Y represents germanium, Z represents at least one trivalent element and F is fluorine, m, p, q, s respectively representing the number of moles of YO₂, Z₂O₃, R_{2/n}O and F and m is in the range 0.1 to 0.9, p is in the range 0 to 0.5, q and s are in the range 0.01 to 0.7, the ratio {(1+m)/p} being 5 or more.

2. A crystalline solid IM-9 according to claim 1, in which X is silicon.

3. A crystalline solid IM-9 according to claim 1 or claim 2, in which Z is aluminium

4. A process for preparing a crystalline solid IM-9 in accordance with one of claims 1 to 3, in which an aqueous mixture comprising at least one source of at least one oxide XO₂, optionally at least one source of an oxide YO₂, optionally at least one source of at least one oxide Z₂O₃, optionally at least one source of an oxide M_{2/w}O and at least one organic nitrogen-containing cation R or at least one precursor of an organic nitrogen-containing cation or at least one decomposition product of an nitrogen-containing organic cation, then carrying out a hydrothermal treatment on said mixture until said crystalline solid IM-9 is formed.

5. A process for preparing a zeolitic crystalline solid IM-9 according to claim 4, in which the molar composition of the reaction mixture is such that:
| | |
|---|---|
| (XO₂ + YO₂)/Z₂O₃ | : at least 5; |
| M_{2/w}O/(XO₂+YO₂) | : 0 to 3; |
| H₂O/ (XO₂ + YO₂) | : 1 to 50; |
| R/(XO₂ + YO₂) | : 0.1 to 3; |
| F/(XO₂+YO₂) | : 0.1 to 3; |
| YO₂/XO₂ | : 0 to 1; |
| LₐS/XO₂ | : 0 to 0.5. |

6. A process for preparing a zeolitic crystalline solid IM-9 according to claim 4 or claim 5, in which R is a salt of (6R,10S)-6,10-dimethyl-5-azoniaspiro-[4,5]decane.

7. A process according to one of claims 4 to 6, in which seeds are added to the reaction mixture.

8. Use of a zeolitic crystalline solid IM-9 according to one of claims 1 to 3 or prepared according to one of claims 4 to 7, as an adsorbant.

9. Use of a zeolitic crystalline solid IM-9 according to one of claims 1 to 3 or prepared according to one of claims 4 to 7, as a catalyst.

## Patentansprüche

1. Kristallisiertes zeolithisches IM-9-Material, das ein Röntgendiffraktionsdiagramm aufweist, das mindestens die in der nachfolgenden Tabelle festgehaltenen Peaks einschließt:
| dₕₖₗ (Å) | I/I₀ | 2 Theta (Grad) |
|---|---|---|
| 13,74 | mf | 6,425 |
| 12,74 | FF | 6,933 |
| 11,42 | ff | 7,735 |
| 9,36 | f | 9,442 |
| 8,30 | m | 10,653 |
| 6,94 | ff | 12,745 |
| 6,23 | ff | 14,204 |
| 6,06 | ff | 10,605 |
| 5,79 | ff | 15,291 |
| 5,47 | ff | 16,192 |
| 5,11 | ff | 17,337 |
| 4,76 | mf | 18,627 |
| 4,56 | ff | 19,452 |
| 4,52 | ff | 19,625 |
| 4,32 | ff | 20,541 |
| 4,25 | f | 20,887 |
| 4,17 | ff | 21,291 |
| 4,06 | f | 21,876 |
| 3,97 | mf | 22,377 |
| 3,79 | f | 23,449 |
| 3,65 | f | 24,365 |
| 3,57 | f | 24,917 |
| 3,44 | f | 25,874 |
| 3,39 | ff | 26,262 |
| 3,30 | ff | 26,995 |
| 3,19 | ff | 27,946 |
| 3,12 | f | 28,589 |
| 3,07 | ff | 29,067 |
| 2,98 | ff | 29,956 |
| 2,91 | ff | 30,698 |
| 2,84 | ff | 31,473 |
| 2,76 | ff | 32,413 |
| 2,55 | ff | 35,160 |
| 2,49 | ff | 36,040 |
| 2,44 | ff | 36,798 |
| 2,40 | ff | 37,441 |
| 2,38 | ff | 37,763 |
| 2,35 | ff | 38,266 |
| 2,13 | ff | 42,404 |
wobei FF = sehr stark; F = stark; m = mittel; mf = mittelschwach; f = schwach; ff = sehr schwach ist, und das eine chemische Zusammensetzung aufweist, ausgedrückt auf wasserfreier Basis als Mol Oxid, die durch die folgende allgemeine Formel definiert wird: XO₂: m YO₂: p Z₂O₃: q R_{2/n}O: s F (I), wobei R für ein oder mehrere Kation(en) der Valenz n steht, X für ein oder mehrere unterschiedliche tetravalent(e) Element(e) des Germaniums steht, Y für Germanium steht, Z für mindestens ein trivalentes Element steht, F Fluor ist, m, p, q, s jeweils für die Molanzahl von YO₂, Z₂O₃, R_{2/n}O und F steht und m im Bereich zwischen 0,1 und 0,9 liegt, p im Bereich zwischen 0 und 0,5 liegt, q und s im Bereich zwischen 0,01 und 0,7 liegen, das Verhältnis {(1+m)/p} größer oder gleich 5 ist.

2. Kristallisiertes IM-9-Material nach Anspruch 1, wobei X Silicium ist.

3. Kristallisiertes IM-9-Material nach Anspruch 1 oder 2, wobei Z Aluminium ist.

4. Verfahren zur Herstellung eines kristallisierten zeolithischen IM-9-Materials nach einem der Ansprüche 1 bis 3, das darin besteht, das Mischen mit Wasser mindestens einer Quelle mindestens eines Oxids XO₂, gegebenenfalls mindestens einer Quelle des Oxids YO₂, gegebenenfalls mindestens einer Quelle eines Oxids Z₂O₃, gegebenenfalls mindestens einer Quelle des Oxids M_{Z/w}O und mindestens eines organischen stickstoffhaltigen Kations R, oder mindestens eines Vorläufers des organischen stickstoffhaltigen Kations oder mindestens eines Abbauprodukts des organischen stickstoffhaltigen Kations durchzuführen, dann eine hydrothermische Behandlung des Gemischs durchzuführen, bis sich das kristallisierte IM-9-Material bildet.

5. Verfahren zur Herstellung eines kristallisierten zeolithischen IM-9-Materials nach Anspruch 4, derart dass die molare Zusammensetzung des Reaktionsgemischs derart ist, dass:
| | |
|---|---|
| (XO₂+YO₂)/Z₂O₃: | mindestens 5, |
| M_{2/w}O/(XO₂+YO₂): | 0 bis 3, |
| H₂O/(XO₂+YO₂): | 1 bis 50, |
| R/(XO₂+YO₂): | 0,1 bis 3, |
| F/(XO₂+YO₂): | 0,1 bis 3, |
| YO₂/XO₂: | 0 bis 1, |
| LₐS/XO₂: | 0 bis 0,5. |

6. Verfahren zur Herstellung eines kristallisierten zeolithischen IM-9-Materials nach Anspruch 4 oder 5, derart, dass R ein Salz von (6R,10S)-6,10-Dimethyl-5-azoniaspiro[4,5]dekan ist.

7. Verfahren nach einem der Ansprüche 4 bis 6, derart, dass dem Reaktionsgemisch Keime zugefügt werden.

8. Verwendung des kristallisierten zeolithischen IM-9-Materials nach einem der Ansprüche 1 bis 3 oder hergestellt nach einem der Ansprüche 4 bis 7 als Adsorptionsmittel.

9. Verwendung des kristallisierten zeolithischen IM-9-Materials nach einem der Ansprüche 1 bis 3 oder hergestellt nach einem der Ansprüche 4 bis 7 als Katalysator.
